Europäisches Patentamt

European Patent Office

Office européen des brevets

(19)

(11) **EP 0 877 260 A1**

(12) # DEMANDE DE BREVET EUROPEEN

(43) Date de publication:
**11.11.1998 Bulletin 1998/46**

(51) Int Cl.⁶: **G01S 13/90**

(21) Numéro de dépôt: **98401088.4**

(22) Date de dépôt: **05.05.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **07.05.1997 FR 9705624**

(71) Demandeur: **THOMSON-CSF**
**75008 Paris (FR)**

(72) Inventeur: **Normant, Eric**
**94117 Arcueil Cedex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(54) **Procédé de traitement du signal de réception d'un radar SAR à rampés de fréquence**

(57) L'invention concerne l'utilisation d'un radar de type Deramp en radar à synthèse d'ouverture pour de l'imagerie radar. Un radar de type Deramp émet des impulsions modulées linéairement en fréquence répétées de manière cohérente et réalise une sorte de compression d'impulsion en réception par démodulation des signaux d'écho reçus au moyen d'une rampe de fréquence reproduisant tout ou partie d'une impulsion émise et par une transformée de Fourier en distance. Avec ce type de compression d'impulsion, il apparaît sur le signal délivré par un radar de type Deramp une modulation de phase parasite perturbant les traitements SAR classiques de construction d'image radar. Le procédé proposé permet d'éliminer les effets néfastes de cette modulation de phase parasite sur la construction d'une image radar. Il consiste à adopter un support temporel particulier pour la démodulation et à corriger la modulation de phase parasite apparaissant avec ce support temporel particulier principalement par une correction de phase au niveau de la réponse impulsionnelle du filtre de focalisation image et accessoirement par une autre correction de phase au niveau des coefficients complexes de réflexion obtenus pour les points de l'image en fin de traitement SAR.

FIG.7

## Description

Les radars à synthèse d'ouverture, connus sous le sigle SAR, initiales des termes anglo-saxons Synthetic Aperture Radar permettent d'obtenir des images du sol de grande résolution, par tous les temps depuis un porteur en déplacement. Ils mettent en oeuvre un éclairement du sol, dans une direction latérale par rapport à la route du porteur, par une forme d'onde électromagnétique récurrente répétée de manière cohérente, la réception de la somme des échos retournés par le sol et l'analyse de cette somme d'échos reçue tout au long de la route du porteur pour en déduire les coefficients de réflexion des différents points de la zone examinée afin de composer une image radar. La cohérence de phase d'une récurrence à l'autre permet d'analyser l'histoire Doppler des différentes cibles et ainsi de les séparer en azimut, c'est-à-dire selon la direction du déplacement du porteur repérée par un axe dit azimut. La résolution suivant la direction perpendiculaire à celle du déplacement du porteur repérée par un axe dit distance se fait en fonction du temps de retour d'écho. Elle est améliorée, de manière classique, par la technique de compression d'impulsions.

Les données délivrées en réception par un radar SAR sont constituées par un échantillonnage du signal vidéo brute reçu à une double cadence : une cadence rapide correspondant à la succession des portes distance découpant le temps d'écoute du radar après chaque émission d'une forme d'onde et une cadence lente correspondant à la succession des récurrences de la forme d'onde émise. Il en résulte que l'on dispose, pour le traitement d'image d'un tableau de données à deux dimensions : une dimension distance le long de laquelle sont alignés les échantillons du signal de vidéo brute reçus en réponse à l'émission d'une forme d'onde, ces échantillons étant pris à la cadence rapide d'échantillonnage, et une dimension azimut le long de laquelle sont arrangées les suites successives d'échantillons du signal de vidéo brute reçu pour les diverses récurrences de la forme d'onde émise.

Le traitement d'image consiste à extraire une image d'un tel tableau à deux dimensions rassemblant les échantillons de vidéo brute reçus par le radar au cours de l'illumination d'une zone. Cette extraction se fait en séparant les contributions, à l'écho global, de chaque point de la zone en tenant compte des évolutions spécifiques des coordonnées distance et azimut du point considéré au cours de son illumination par le radar en déplacement au-dessus de la zone. L'évolution de la coordonnée distance consiste en un rapprochement du point jusqu'à ce que le radar passe à sa perpendiculaire puis en un éloignement. Le phénomène est connu sous la dénomination de migration en distance. L'évolution de la coordonnée azimut consiste en un rapprochement à vitesse décroissante impliquant un effet Doppler à fréquence positive en décroissance suivi d'un éloignement à vitesse croissante impliquant un effet Doppler à fréquence négative en augmentation avec annulation de l'effet Doppler au passage du radar par la perpendiculaire du point. Ce phénomène est connu sous la dénomination historique Doppler

Si l'on fait abstraction de la compression d'impulsion, le traitement d'image consiste, pour chaque point d'une zone illuminée par un radar SAR, à sélectionner le domaine en azimut du tableau des échantillons de vidéo brute correspondant à la période d'éclairement du point considéré par le radar, puis, dans ce domaine en azimut, à repérer la bande d'échantillons auquel le point considéré a contribué par son écho, en tenant compte pour ce faire de la migration distance, et enfin à filtrer la collection d'échantillons de cette bande pour tenir compte de l'historique Doppler du point considéré et en extraire son coefficient complexe de réflexion. Ces opérations qui sont nécessaires pour chaque point d'une zone imagée, sont faites de manière à limiter le plus possible la quantité de calcul.

Une analyse théorique de la nature des opérations à mener sur le tableau à deux dimensions distance et azimut, des échantillons de vidéo brute de réception délivrés par un radar SAR, y compris une éventuelle opération préalable de compression d'impulsion, pour obtenir une image montre que ces opérations peuvent être interprétées comme un filtrage bidimensionnel, dans les dimensions distance et azimut, du tableau, au moyen d'un filtre dit de focalisation d'image, dont la réponse impulsionnelle $h(\tau,t,\tau_i)$ à deux variables temporelles $\tau$ distance et t azimut, n'est pas stationnaire en distance, ce qui justifie la présence d'un deuxième paramètre distance $\tau_i$ dans son expression. Il en découle une façon classique de procéder au traitement du tableau des échantillons de vidéo brute de réception délivrés par un radar SAR qui consiste :

- à déterminer la réponse impulsionnelle $h(\tau,t,\tau_i)$ à deux variables temporelles $\tau$ distance et t azimut, valable localement dans des bandes distance $\tau_i$ où elle est supposée restée stationnaire, définissant le filtre bidimensionnel de focalisation d'image réalisant à la fois la compression d'impulsion, la correction de la migration distance et l'extraction des composantes de fréquence correspondant à l'historique Doppler, cette détermination se faisant à partir des propriétés de la forme d'onde émise et des paramètres géométriques de la prise de vue,
- à convoluer cette réponse impulsionnelle de filtrage de focalisation d'image au tableau des échantillons du signal vidéo brute de réception préalablement découpé en bandes distance, en passant par des transformations de Fourier directe et inverse bidimensionnelles pour se retrouver dans les espaces des fréquences distance et azimut et éviter des calculs d'intégration inhérents à une convolution, et
- à réunir les bandes d'image obtenues pour reconstituer une image complète.

On montre que l'on peut réaliser une certaine économie de calcul en effectuant les opérations de compression d'impulsion préalablement à celles du traitement d'image.

La compression d'impulsion qui permet d'améliorer la résolution distance, peut se réaliser sur de nombreuses formes d'ondes émises et notamment sur une forme d'onde constituée d'une impulsion modulée linéairement en fréquence répétée de manière cohérente. La compression d'impulsion consiste en théorie à filtrer le signal reçu avec un filtre adapté à la forme d'onde émise ou encore à effectuer une corrélation du signal reçu avec la forme d'onde émise. C'est une opération difficile à réaliser, souvent coûteuse en calcul. C'est pourquoi on cherche souvent à lui substituer des traitements plus simples donnant des résultats analogues. Un exemple en est donné par un type de radar connu sous la dénomination anglo-saxonne de "Deramp "qui émet des impulsions hyperfréquence modulées linéairement en fréquence répétées de manière cohérente et qui réalise une sorte de compression d'impulsion en réception, non pas par un filtrage adapté, mais par une démodulation du signal reçu par les impulsions émises et une analyse fréquentielle du signal reçu démodulé. Pour des détails sur le radar "Deramp" on peut se reporter au livre :

[1] J.P. HARDANGE, P. LACOMME et J.C. MARCHAIS, "Radars aéroportés et spatiaux.", Masson 1995, pp. 168-170.

Dans un radar "Deramp", on tire avantage du fait qu'avec une impulsion modulée linéairement en fréquence, il y a une relation de proportionnalité entre le temps écoulé et la fréquence instantanée de l'impulsion. Grâce à celle-ci, le mélange de deux impulsions décalées dans le temps comme une impulsion émise et l'impulsion en écho qui en est retournée par une cible ponctuelle, donne un signal dont la fréquence est constante par rapport au temps et dépend du retard relatif entre les deux impulsions. Ainsi, la corrélation entre les formes d'onde émise et reçue d'où résulte la compression d'impulsion peut être remplacée par une simple démodulation du signal reçu par le signal émis suivie d'une transformée de Fourier avec des différences mineures dans le résultat.

L'avantage opérationnel du traitement effectué dans un radar "Deramp" en vue d'une compression d'impulsion est qu'il permet une très haute résolution en distance avec un récepteur de bande instantanée faible. Dans le cas d'une utilisation en imagerie, cela se fait au détriment de la largeur de la fauchée traitée, c'est à dire de la durée utile de réception entre chaque forme d'onde émise car la bande instantanée utile dans le récepteur est proportionnelle à la durée de la fauchée traitée. Ce mode de compression d'impulsion est donc particulièrement adapté aux systèmes d'imagerie radar très haute résolution sur des zones peu étendues en distance.

L'utilisation d'un radar de type Deramp en radar à ouverture synthétique pour faire de l'imagerie radar soulève des difficultés en raison des propriétés particulières de son signal de réception démodulé. Celui-ci a en effet la propriété de présenter, par rapport au signal d'écho de cible qui en est à l'origine, un retard variable en fonction de la position en distance de la cible dans la fauchée c'est-à-dire dans la zone illuminée par l'impulsion émise, et également d'avoir une durée variable, inférieure à celle du signal d'écho de cible qui en est à l'origine, dépendant également de la position en distance de la cible dans la fauchée. Son retard variable par rapport au signal d'écho qui en est à l'origine engendre une phase parasite qui vient perturber le traitement ultérieur de construction d'image et dégrade la netteté de l'image tandis que sa durée variable donne au radar de type Deramp une résolution variable en distance qui joue aussi sur la netteté de l'image.

La présente invention a pour but de résoudre ces difficultés afin d'obtenir une image radar la plus nette possible.

Elle a pour objet un procédé de traitement du signal de réception d'un radar SAR à rampes de fréquences pour obtenir une image radar. Le radar SAR est embarqué à bord d'un porteur en déplacement au dessus d'une zone de terrain à imager qu'il illumine. Il émet des impulsions modulées linéairement en fréquence de durée T, répétées de manière cohérente, démodule le signal d'écho reçu en retour entre chaque impulsion émise par une rampe de démodulation qui est centrée en distance sur le milieu de la zone utile illuminée ou fauchée utile, qui reprend la forme de tout ou partie de l'impulsion émise et qui a une durée $T_d$ inférieure ou égale à la durée T d'une impulsion émise, suffisante pour recouvrir l'intervalle de temps de réception où se chevauchent les signaux d'écho de l'ensemble des cibles de la fauchée utile, et délivre, après démodulation, un signal vidéo brute de réception disponible sous la forme d'échantillons successifs ou données de réception qui sont pris à une double cadence : une cadence rapide correspondant à la succession des portes distance et définissant une dimension temporelle distance $\tau$ selon un axe distance orienté latéralement par rapport à la trajectoire du porteur du radar SAR, et une cadence lente correspondant à la succession des récurrences et définissant une dimension temporelle azimut t selon un axe azimut orienté dans la direction de déplacement du porteur du radar SAR et qui se présentent sous la forme d'un tableau de données de réception à deux dimensions distance et azimut. Ce procédé, comporte les étapes successives de traitement suivantes :

- sélection d'une durée utile $T_a$ pour la démodulation commençant au plus tôt à l'instant de début de réception d'un écho renvoyé par une cible placée en distance à l'extrémité éloignée de la fauchée utile et se terminant au plus tard à l'instant de fin de réception d'un écho renvoyé par une cible placée en distance à l'extrémité proche de la fauchée utile,
- remplacement des données du tableau de données de réception, considérées selon la dimension distance, par leur transformée de Fourier monodimensionnelle en distance pour obtenir après la démodulation un genre de compression d'impulsion affectée d'un terme de phase parasite de compression d'impulsion,

- réarrangement des données du tableau selon la dimension distance afin de disposer de données correspondant à un ordre d'éloignement croissant en distance,
- découpage du tableau en bandes chevauchantes, parallèlement à l'axe azimut, de manière à avoir des bandes correspondant à des plages de distance étroites $\tau_i$ où peut être déterminé localement, en fonction des paramètres géométriques de la prise de vue, un filtre bidimensionnel de focalisation de l'image, ayant une réponse impulsionnelle $h_l(\tau,t,\tau_i)$ à deux variables temporelles $\tau$ distance et t azimut, et une fonction de correction de la phase parasite due à la compression d'impulsion, stationnaires dans la bande de distance $\tau_i$,
- filtrage des bandes de tableau par le filtre bidimensionnel de focalisation d'image dont la réponse impulsionnelle a été modifiée par la fonction de correction de la phase parasite, et
- juxtaposition des bandes de tableau résultant du filtrage pour obtenir un tableau des coefficients complexes de réflexion des points de la zone de terrain illuminée, et
- construction d'une image de la zone illuminée à partir des modules des coefficients complexes de réflexion figurant dans le tableau obtenu à l'étape précédente.

Avantageusement, la sélection de la durée utile $T_a$ de démodulation se fait en adoptant une rampe de démodulation dont la durée $T_d$ correspond à cette durée utile $T_a$

Selon une variante, la sélection de la durée utile $T_a$ de démodulation se fait sur le tableau bidimensionnel de données de réception, avant qu'il ait subi la transformée de Fourier monodimensionnelle en distance, par retrait des données de réception se présentant selon l'axe distance en dehors de la durée utile $T_a$ choisie et leurs remplacements par des valeurs nulles.

Avantageusement, le filtrage bidimensionnel des bandes de tableau par le filtre bidimensionnel de focalisation d'image à réponse impulsionnelle modifiée par la fonction de correction de la phase parasite se fait en passant dans les espaces des fréquences distance et azimut, par d'autres transformations monodimensionnelles de Fourier directes et inverses selon les deux dimensions distance et azimut du tableau des données de manière à éviter des calculs de convolution.

D'autres caractéristiques et avantages de l'invention ressortiront de la description ci-après d'un mode de réalisation donné à titre d'exemple. Cette description sera faite en regard du dessin dans lequel :

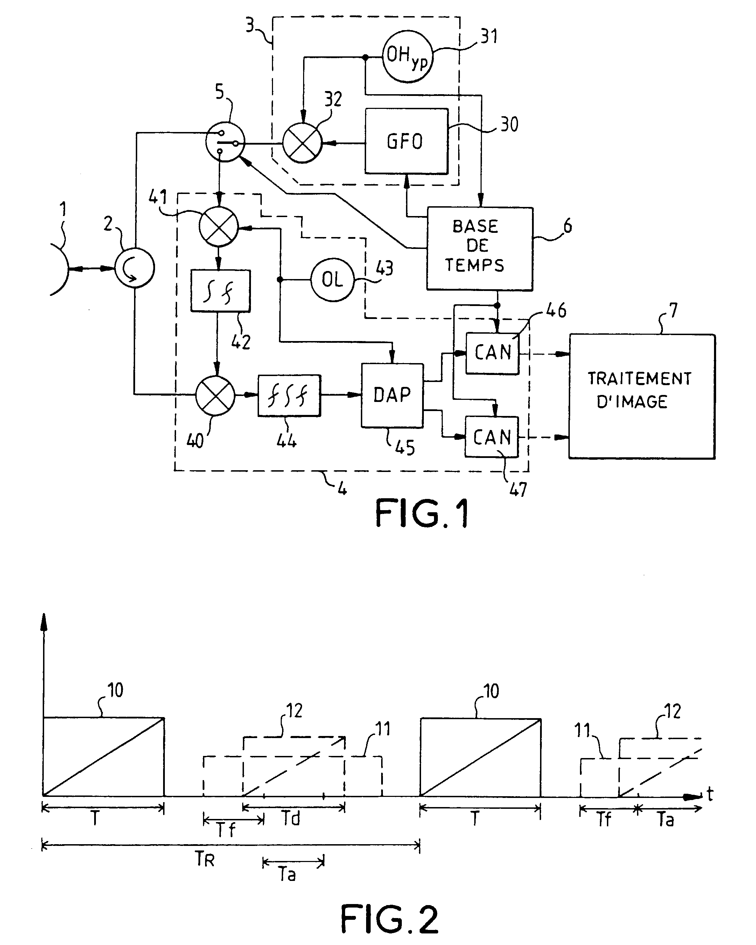

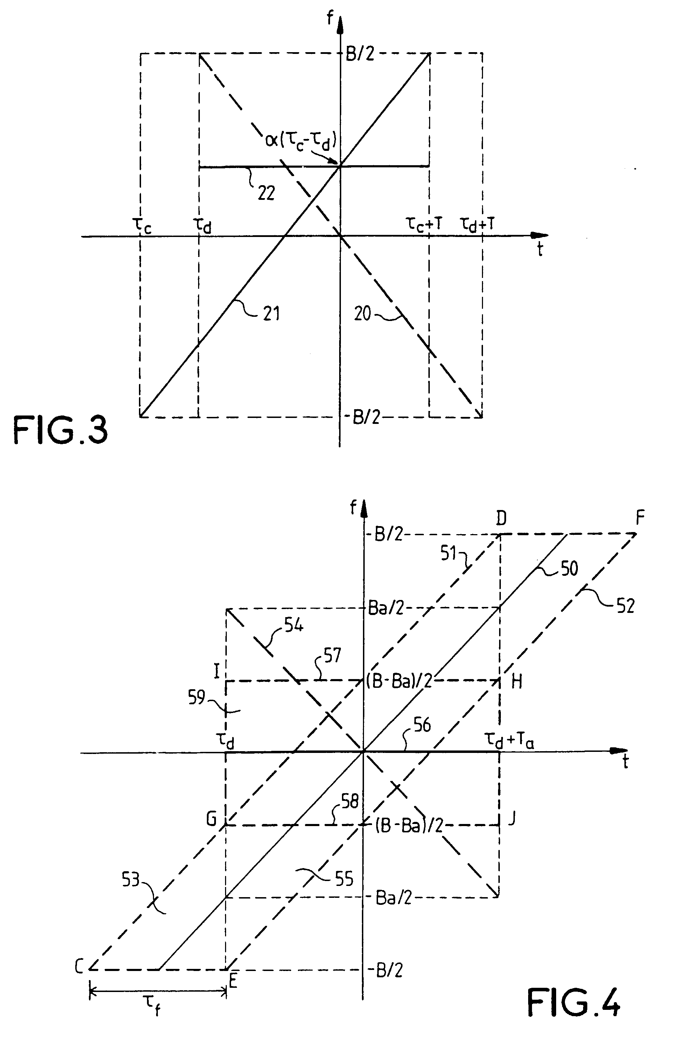

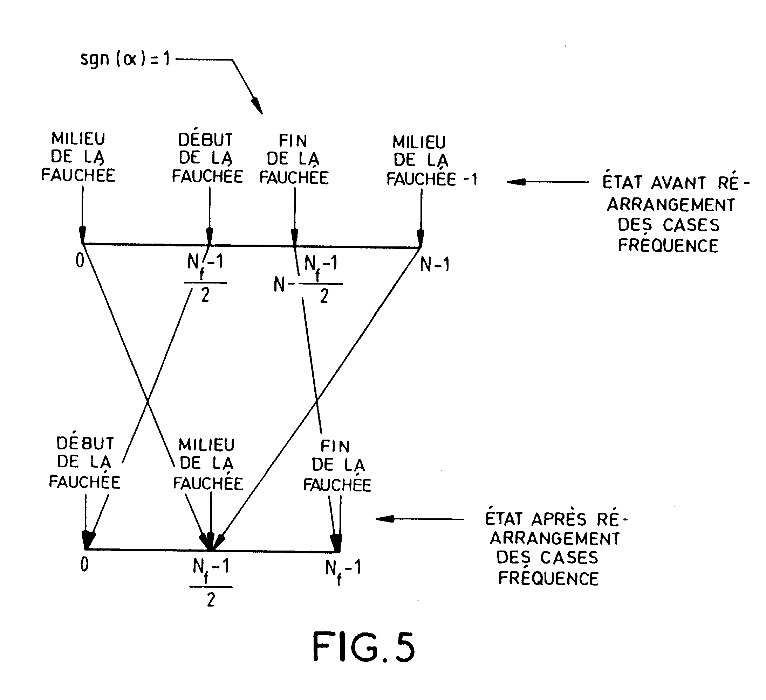

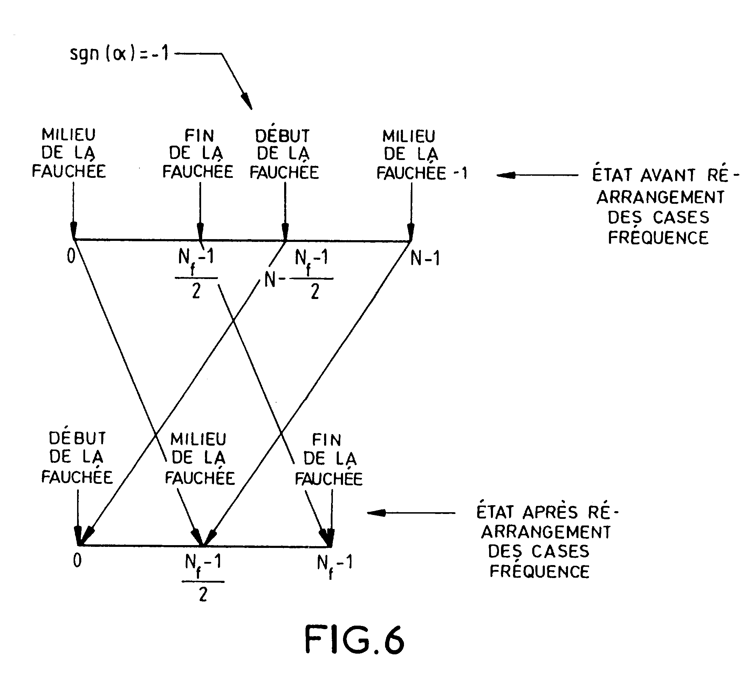

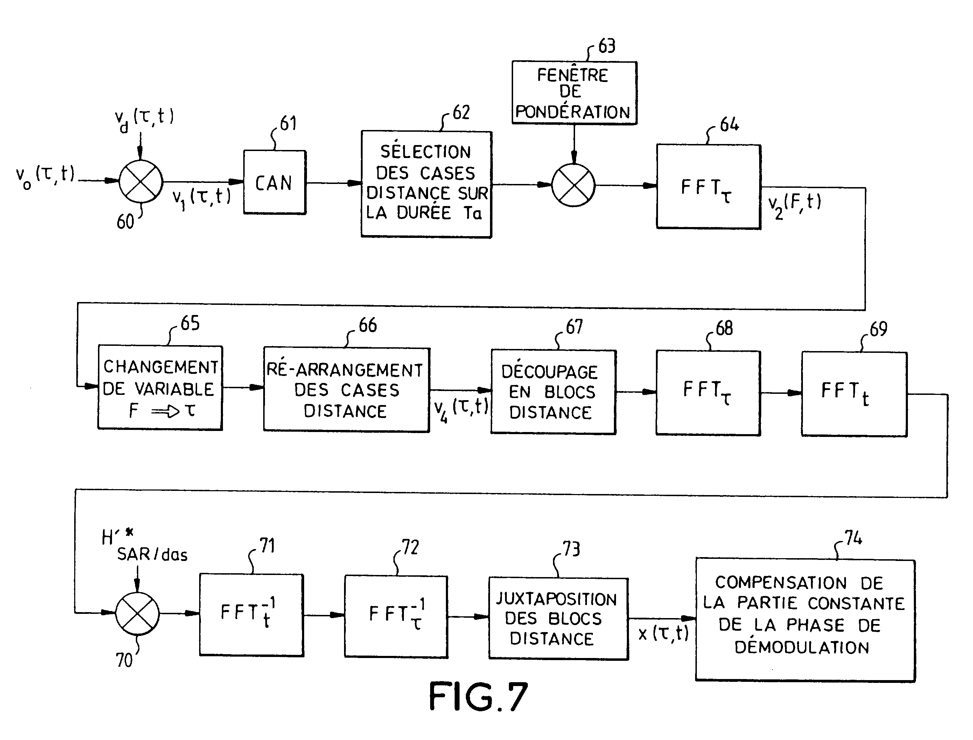

- une figure 1 représente de manière schématique un radar SAR de type Deramp,
- une figure 2 est un chronogramme explicitant le séquencement des signaux émis et reçus par le radar de la figure 1,
- une figure 3 est un diagramme dans le domaine temps-fréquence explicitant la manière dont est réalisée une opération de démodulation et de compression d'impulsion dans un radar de type Deramp,
- une figure 4 est un diagramme dans le domaine temps-fréquence explicitant le choix fait dans le procédé selon l'invention, d'un intervalle de temps commun adopté pour la démodulation de tous les signaux d'échos retournés par une zone utile de terrain ou fauchée en réponse à une impulsion émise par le radar de la figure 1,
- des figures 5 et 6 sont des schémas explicitant le réarrangement effectué après une première transformation de Fourier en distance, sur le tableau des données délivrées par un radar Deramp utilisé en radar à ouverture synthétique pour obtenir après compression d'impulsion des données disposées dans le tableau selon un ordre croissant de distance, et
- une figure 7 est un synoptique illustrant les principales étapes d'un procédé de traitement selon l'invention appliqué au signal de réception d'un radar de type Deramp utilisé en radar en synthèse d'ouverture en vue de faire de l'imagerie radar.

La figure 1 est un schéma synoptique d'un radar SAR monostatique à compression d'impulsion connu sous les diverses dénominations anglo-saxonnes :"Deramp, Deramping, Dechirping,..". Le radar, monté sur un porteur en déplacement au-dessus d'une zone du sol à imager, se compose d'une antenne 1 reliée par un circulateur 2 à une partie émission 3 et à une partie réception 4, avec un commutateur inverseur 5 qui est placé entre la partie émission 3 et le circulateur 2, et qui permet d'extraire de la partie émission 3, un signal de démodulation pour la partie réception 4, une base de temps 6 organisant le séquencement des divers signaux et enfin, un circuit de traitement d'image 7 souvent déporté au sol dans une station de télémétrie, assurant la construction d'une image à partir des données de vidéo brute délivrées par la partie réception 4.

La partie émission 3 comporte un générateur de forme d'onde GFO 30 engendrant, à une fréquence intermédiaire, des rampes linéaires de fréquence, une source hyperfréquence $OH_{YP}$ 31 engendrant une porteuse hyperfréquence et un mélangeur 32 connecté aux sorties du générateur de forme d'onde GFO 30 et de la source hyperfréquence SF 31 afin de délivrer des impulsions hyperfréquences modulées linéairement en fréquence à destination du commutateur inverseur 5, et au-delà, du circulateur 2 et de l'antenne 1 ainsi que de la partie réception 4.

La partie réception 4 comporte un mélangeur de démodulation 40 placé en entrée et recevant un signal hyperfréquence en provenance du circulateur 2 et de l'antenne 1, et un signal de démodulation issu de la partie émission 3.

Ce signal de démodulation est constitué d'impulsions hyperfréquence modulées linéairement en fréquence engendrées par la partie émission 3, dérivées par l'intermédiaire du commutateur inverseur 5 et translatées dans une bande supérieure de fréquence au moyen d'un mélangeur 41 suivi d'un filtre passe-haut 42 et attaqué par un oscillateur local OL 43 à fréquence intermédiaire. Le mélangeur de démodulation 40 est suivi d'un filtre passe-bande 44 permettant de sélectionner la plage de fréquence utile, c'est-à-dire le domaine de distance observé ou la fauchée utile, d'un démodulateur amplitude-phase DAP 45 recevant la porteuse à fréquence intermédiaire de l'oscillateur local OL 43 et de deux convertisseurs analogique-numérique 46, 47 assurant l'échantillonnage et la conversion en numérique des parties en phase et en quadrature du signal vidéo brute de réception, à une double cadence : une cadence rapide correspondant à la succession des portes distance découpant le temps d'écoute du radar entre chaque émission d'une impulsion modulée linéairement en fréquence et une cadence lente correspondant à la succession des impulsions modulées linéairement en fréquence émises.

La base de temps 6 assure le séquencement des impulsions modulées linéairement en fréquence engendrées par la partie émission 3 afin qu'elles se répètent de manière cohérente par rapport au signal hyperfréquence de la source hyperfréquence SF 31, la manoeuvre du commutateur inverseur 5 de manière à avoir entre chaque impulsion modulée linéairement en fréquence transmise à l'antenne 1, une impulsion modulée linéairement en fréquence dérivée vers la partie réception 4 pour la démodulation, et le double cadencement de l'échantillonnage du signal vidéo brute de réception effectué par les convertisseurs analogique-numérique 46, 47 de la partie réception 4. Pour accomplir cette tâche, la base de temps 6 est synchronisée sur le signal de la source hyperfréquence 31 de la partie émission.

Par suite de cette double cadence d'échantillonnage, il est habituel de présenter les échantillons du signal vidéo brute de réception délivré par la partie réception 4 sous la forme d'un tableau à deux dimensions : une dimension distance le long de laquelle sont alignés les échantillons du signal vidéo brute reçus en réponse à l'émission d'une impulsion modulée linéairement en fréquence et une dimension azimut le long de laquelle sont arrangées les suites successives d'échantillons de signal vidéo brute reçues pour les diverses impulsions modulées linéairement en fréquence émises. Un tel tableau d'échantillons de signal vidéo brute de réception est alors transmis à un dispositif de traitement d'image 7 pour y être traité dans les deux dimensions distance et azimut afin d'en tirer une image.

La figure 2 montre le séquencement des différents signaux d'un radar SAR à compression d'impulsion de type "Deramp". On y distingue les impulsions émises 10, de durée T, qui sont modulées linéairement en fréquence et se succèdent au bout d'un délai $T_R$, laissant entre elles pour la réception une durée $T_R$-T. La durée $T_R$-T entre les impulsions émises est occupée par une période de réception 11 qui débute avec le commencement d'un écho dû à une cible proche située en début de fauchée utile et qui s'achève avec la fin d'un écho dû à une cible éloignée située en fin de fauchée utile. Quelque part dans la période de réception apparaît une impulsion de démodulation 12 qui est la recopie d'une partie de l'impulsion émise de durée $T_d$ et qui apparaît avec un retard tel qu'elle soit centrée sur le milieu de la fauchée utile. Deux délais intéressants apparaissent sur cette figure 2, le délai $T_f$ qui correspond à la durée de la fauchée utile et qui est l'intervalle de temps séparant la réception des échos des cibles situées en début et en fin de fauchée, et le délai $T_a$ qui est la durée habituelle d'analyse, ici le temps pendant lequel tous les échos retournés par les cibles situées dans la fauchée utile sont reçus simultanément.

La figure 3 illustre le principe de démodulation d'une impulsion modulée linéairement en fréquence.

Dans le domaine temps-fréquence, une impulsion modulée linéairement en fréquence peut être assimilée à une droite de pente $\alpha$ telle que :

$$|\alpha| = \frac{B}{T}$$

où B est la bande de fréquence de l'impulsion et T sa durée. On suppose ici que l'on a affaire à des impulsions modulées linéairement en fréquence dans le sens des fréquences croissantes et donc que les droites qui les représentent sont des rampes à pente $\alpha$ positive. En outre, on représente, par commodité, une impulsion utilisée pour la démodulation ou rampe de démodulation avec une pente négative $-\alpha$ car alors le processus de démodulation, qui consiste en un mélange soustractif de deux fréquences instantanées, se traduit sur la figure comme la somme point à point du signal utile et du signal de démodulation. Avec cette convention qui restera valable dans la suite de la description et en adoptant comme origine des coordonnées le centre d'une impulsion de démodulation, la rampe de démodulation apparaît comme un segment de droite 20 de pente négative $-\alpha$, tracé en tirets et passant par l'origine. Ce segment de droite 20 débute à un instant $\tau_d$, se termine à un instant $\tau_d + T_d$, $T_d$ étant la durée de la rampe de démodulation, et occupe une bande de fréquence $[+B_a/2, -B_a/2]$. Un écho en réponse d'une cible apparaît comme un segment de droite 21 de pente $\alpha$, tracé en trait plein débutant à un instant $\tau_c$ au bas -B/2 de la bande de fréquence d'une impulsion émise et se terminant à un instant $\tau_c$+T au sommet B/2 de la bande de fréquence d'une impulsion émise. Il en résulte qu'il donne après démodulation un signal vidéo brute constitué d'une fréquence pure :

$$f_{c/d} = -\alpha(\tau_c - \tau_d)$$

représenté sur la figure 3 par un segment de droite horizontal 22 en trait plein, débutant l'instant le plus tardif entre $\tau_c$ ou $\tau_d$ ici $\tau_d$ et se terminant à l'instant le plus précoce entre $\tau_c$+T ou $\tau_d$+$T_d$ ici $\tau_c$+T. On voit donc que le signal vidéo brute de réception résultant de la démodulation de l'écho dû à une cible est une sinusoïde dont la fréquence est proportionnelle au retard relatif de l'écho de la cible par rapport à l'instant de déclenchement de la rampe de démodulation.

De façon plus précise, on peut exprimer le signal émis, le signal reçu associé à une cible correspondant à un temps de propagation $\tau_c$, et le signal de démodulation déclenché à l'instant $\tau_d$ respectivement par :

$$\begin{cases} p(\tau) = rect\left[\dfrac{\tau}{T}\right]\cos 2\pi\left(f_c\tau + \dfrac{1}{2}\alpha\tau^2\right) \\[2mm] p(\tau - \tau_c) \\[2mm] p(\tau - \tau_d)rect\left[\dfrac{\tau}{T_d}\right] \end{cases}$$

où $f_c$ est la fréquence centrale d'une impulsion, $\alpha$ le rapport de la bande de fréquence B d'une impulsion émise sur sa durée T et $T_d$ la durée de la rampe de démodulation. A l'issue de la démodulation, le signal reçu associé à cette cible est donc donné par :

$$\begin{aligned} p(\tau - \tau_c)p(\tau - \tau_d) = {}& rect\left[\frac{\tau - \tau_c}{T}\right]rect\left[\frac{\tau - \tau_d}{T_d}\right] \\ &\times \frac{1}{2}\left\{\cos\left[-2\pi f_c(\tau_c - \tau_d) + \pi\alpha\left(\tau_c^2 - \tau_d^2\right) - 2\pi\alpha(\tau_c - \tau_d)\tau\right]\right. \\ &\left. + \cos\left[4\pi f_c\tau - 2\pi f_c(\tau_c + \tau_d) + \pi\alpha\left\{(\tau - \tau_c)^2 + (\tau - \tau_d)^2\right\}\right]\right\} \end{aligned}$$

Le deuxième terme en cosinus disparaît après le filtrage passe-bande 44 qui intervient juste après la démodulation. Le rôle du filtrage passe-bande 44 est d'éliminer les fréquences image engendrées par le mélangeur de démodulation 40 et aussi, comme on l'a précisé précédemment, de sélectionner la fauchée utile et d'empêcher les cibles voisines de la fauchée utile de venir parasiter la fauchée utile après échantillonnage.

Le premier terme en cosinus qui est le seul à subsister après démodulation et filtrage montre que le signal vidéo brute de réception en provenance d'une cible est une sinusoïde dont la fréquence $-\alpha(\tau_c - \tau_d)$ est proportionnelle au retard relatif de la cible par rapport à l'instant de déclenchement de la rampe de démodulation comme cela ressortait déjà du diagramme temps-fréquence de la figure 3, et dont le déphasage est fonction du temps de propagation d'écho $\tau_c$ et de l'instant de déclenchement $\tau_d$ du signal de démodulation.

Le signal d'écho $v_0(\tau, t)$ reçu avant décompression à un instant distance $\tau$ et un instant azimut t, résulte d'une convolution à deux dimensions distance et azimut entre la réflectivité complexe du terrain $\gamma(\tau, t)$ illuminé, recherchée pour tracer l'image du terrain, et le produit du type d'impulsion émise $p(\tau)$ par la réponse impulsionnelle $h_{SAR}(\tau, t)$ du filtre de focalisation image déterminée sans tenir compte de la compression d'impulsion distance, uniquement en fonction des paramètres géométriques de la prise de vue et supposée stationnaire pour une certaine bande distance, de sorte que l'on peut écrire, pour cette bande distance :

$$v_0(\tau, t) = \iint \gamma(\tau', t')p\left(\tau - \frac{T}{2} + \tau_0 - \tau_c(t - t' - T_e/2) - \tau'\right)h_{az}(t - t' - T_e/2)d\tau'dt'$$

où :

- $\tau_0$ désigne l'instant à partir duquel on commence à enregistrer les échantillons de signal vidéo brute de réception,
- $\tau_c$ est le temps de propagation du signal d'écho d'une cible,
- $T_e$ est la durée d'éclairement d'une cible par le radar en défilement azimutal,
- $p(\tau)$ désigne le type d'impulsion émise,
- $h_{SAR}(t)$ la réponse impulsionnelle du filtre de focalisation

image compte non tenu de la compression d'impulsion, cette réponse impulsionnelle dépendant implicitement de la variable distance $\tau$ qui n'est pas mentionnée dans un soucis de simplification d'écriture et étant telle que :

$$h_{SAR}(t) = rect\left[\frac{t}{T_e}\right] g_{az}(t) \exp\left[-i2\pi f_c \tau_c(t)\right]$$

le terme de phase constant $\exp[i2\pi f_c \tau_d]$ étant omis dans un but de simplification, $f_c$ désignant la fréquence centrale d'une impulsion émise et $g_{az}(t)$ le diagramme d'ouverture azimutale de l'antenne du radar.

Dans la suite des développements, on assimilera, afin d'alléger les expressions mathématiques :

$$\tau_c(t\text{-}t'\text{-}T_e/2) \Leftrightarrow \tau_c$$

L'impulsion émise étant une impulsion modulée linéairement en fréquence de bande de fréquence B, de durée T et de pente de modulation $|\alpha| = B/T$, on peut poser :

$$p(\tau) = rect\left[\frac{\tau}{T}\right] \exp\left[i2\pi\frac{1}{2}\alpha\tau^2\right]$$

La rampe de démodulation est caractérisée par son instant de déclenchement $\tau_d$ et sa durée $T_d$. L'expression de son enveloppe complexe est donnée par :

$$r_d(\tau) = p_d^*\left(\tau - \frac{T_d}{2} - \tau_d + \tau_0\right)$$

On en déduit que l'expression du signal reçu après démodulation s'écrit :

$$v_1(\tau,t) = \iint \gamma(\tau',t') h_{SAR}(t - t' - T_e/2)$$
$$\times p\left(\tau - \frac{T}{2} + \tau_0 - \tau_c - \tau'\right) p_d^*\left(\tau - \frac{T_d}{2} + \tau_0 - \tau_d\right) d\tau' dt'$$

$$(1)$$

L'analyse de cette expression montre que pour être capable d'évaluer la réflectivité complexe $\gamma(\tau,t)$ du terrain illuminé par le radar afin d'en construire une image radar, il ne suffit pas de connaître la réponse impulsionnelle $h_{SAR}(t)$ du filtre de focalisation image défini en l'absence de compression d'impulsion mais il faut encore être capable d'évaluer les produits des échos d'impulsions retournés par les cibles $p(\ )$ par la rampe de démodulation $p_d^*(\ )$. Ce produit, une fois développé, contient deux termes :

- un terme définissant un support temporel :

$$rect\left[\frac{\tau - T/2 + \tau_0 - \tau_c - \tau'}{T}\right] \times rect\left[\frac{\tau - T_d/2 + \tau_0 - \tau_d}{T_d}\right]$$

- un terme de phase associé à la démodulation :

$$\exp\left[i2\pi\frac{1}{2}\alpha\left\{\left(\tau - T/2 + \tau_0 - \tau_c - \tau'\right)^2 - \left(\tau - T_d/2 + \tau_0 - \tau_d\right)^2\right\}\right]$$

qui s'écrit encore :

$$\exp\left[i2\pi\frac{1}{2}\alpha\left\{\left(\tau_c + \tau'\right)^2 - \tau_d^2 + \frac{T^2}{4} - \frac{T_d^2}{4} + T\left(\tau_c + \tau'\right) - T_d\tau_d\right\}\right]$$

$$\exp\left[-i2\pi\alpha\left\{\left(\tau_c + \tau'\right) - \tau_d + \left(T - T_d\right)/2\right\}\left(\tau + \tau_0\right)\right]$$

Le support temporel définit l'intervalle de temps pendant lequel le signal d'écho renvoyé par une cible existe et est démodulé. Cet intervalle de temps a une position sur l'axe distance et une durée variables en fonction de la position en distance de la cible considérée dans la fauchée utile et de la position en distance de la rampe de démodulation qui est de manière habituelle le milieu de la fauchée utile. Une résolution en distance constante sur la fauchée utile, impose d'adopter des supports temporels de même durée pour les signaux d'échos de toutes les cibles, quelles que soient leurs positions en distance dans la fauchée utile. Cela conduit à prendre des dispositions pour que les supports temporels réellement utilisés pour les signaux de toutes les cibles de la fauchée utile aient la même durée.

Le terme de déphasage associé à la démodulation provient du fait que les supports temporels des signaux d'écho des cibles ont une position par rapport aux signaux d'écho des cibles eux-mêmes, qui varie en fonction de la position en distance des cibles.

Pour construire une image à partir du signal de vidéo brute de réception délivré par un radar de type "Deramp" il faut donc, en plus des opérations habituelles de traitement d'image, s'affranchir de la dépendance de la durée du support temporel utilisé pour la démodulation du signal d'écho renvoyé par une cible, en fonction de la position en distance de cette cible dans la fauchée utile, et corriger les effets d'un éventuel terme de phase associé à la démodulation et dû à une variation de position du support temporel utilisé pour la démodulation du signal d'écho renvoyé par une cible par rapport au signal d'écho lui-même en fonction de la position en distance de la cible.

Pour éviter une variation de durée du support temporel de démodulation du signal d'écho renvoyé par une cible en fonction de la position en distance de cette cible dans la fauchée utile, on propose de le limiter à la partie commune de tous les signaux d'écho renvoyés par les cibles de la fauchée utile. Une façon de faire consiste à dimensionner et positionner la rampe de démodulation de manière à ne démoduler que les parties des signaux d'écho appartenant à une plage temporelle en distance commençant à l'instant de début de réception d'un écho renvoyé par une cible placée en distance à l'extrémité éloignée de la fauchée utile et finissant à l'instant de fin de réception d'un écho renvoyé par une cible placée en distance à l'extrémité proche de la fauchée utile. On obtient alors un support temporel de démodulation de durée constante $T_a$ égale à la durée $T_d$ de la rampe de démodulation elle-même inférieure à la durée T d'une impulsion émise.

La figure 4 est un diagramme temps-fréquence qui illustre ce choix. On y distingue un système d'axes temps-fréquence ayant pour origine temporelle le temps de propagation d'écho correspondant au milieu de la fauchée utile et pour origine fréquentielle le milieu de la bande de fréquence [-B/2, B/2] d'une impulsion émise. Dans ce système d'axes temps-fréquence sont tracés :

- un segment de droite 50 de pente $\alpha$ représenté en trait plein, passant par l'origine et correspondant à la réponse à une impulsion émise, d'une cible située en distance, en milieu de fauchée utile. Cette réponse est centrée sur l'origine et dure le temps d'une période T d'une impulsion émise.

- deux segments de droite CD et EF 51, 52 de pente $\alpha$ représentés en tiretets de part et d'autre du segment de droite 50 et correspondant aux réponses de deux cibles à une impulsion émise : l'une 51 située en distance en début de fauchée utile, l'autre 52 située en distance en fin de fauchée utile. Ces deux segments de droite parallèles 51, 52 sont séparés en temps d'une durée $T_f$ correspondant à la largeur en distance de la fauchée utile. Leurs extrémités CDEF forment les sommets d'un parallélogramme 53 délimitant dans le domaine temps-fréquence, la surface occupée par les échos retournés par toutes les cibles de la fauchée utile.

- un segment de droite 54 de pente $-\alpha$ représenté en tirets, passant par l'origine et correspondant à la rampe de démodulation utilisée. Celle-ci débute dans le temps à un instant $\tau_d$ placé au commencement de la réception d'un écho 51 d'une cible située en distance à l'extrémité éloignée de la fauchée utile et se termine dans le temps à un instant $\tau_d+T_d$ placé à la fin de la réception d'un écho 52 d'une cible située en distance à l'extrémité proche de la fauchée utile.

Avec ce positionnement et ce dimensionnement de la rampe de démodulation 54, les supports temporels utilisés pour la démodulation des échos de l'ensemble des cibles de la fauchée utile sont tous confondus avec une durée fixe $T_a$ égale à la durée $T_d$ de la rampe de démodulation. La rampe de démodulation 54, qui est centrée sur l'origine des axes correspondant au milieu de la fauchée utile, occupe un intervalle de temps $[\tau_d,\ \tau_d+T_d]$ ou $[\tau_d,\ \tau_d+T_a]$ inférieur à la durée T d'une impulsion émise et une bande de fréquence $[-B_a/2,\ B_a/2]$ inférieure à la bande de fréquence $[-B/2,\ B/2]$ d'une impulsion émise.

Les parties qui seront démodulées des échos des cibles de la fauchée utile sont ainsi restreintes à la surface d'un parallélogramme 55 ayant pour sommets les points D et E, la projection G du point E parallèlement à l'axe des fréquences sur le segment de droite CD 51 représentant l'écho retourné par une cible située en distance en début de fauchée utile, et la projection H du point D parallèlement à l'axe des fréquences sur le segment de droite EF représentant l'écho retourné par une cible située en distance en fin de fauchée utile.

Après démodulation, les signaux d'écho de cible sont transformés en sinusoïdes pures apparaissant sur le diagramme temps-fréquence de la figure 4 sous forme de segments de droite horizontaux comme cela a été expliqué relativement à la figure 3. Parmi eux, on distingue le segment de droite horizontal 56, tracé en trait épais sur l'axe des temps, qui correspond à la démodulation du signal d'écho 51 d'une cible située en distance au milieu de la fauchée utile, le segment de droite IH 57 tracé en tiretets, qui correspond à la démodulation du signal d'écho 51 d'une cible située en distance en début de fauchée utile et le segment de droite GJ 58 tracé en tiretets, qui correspond à la démodulation du signal d'écho 52 d'une cible située en distance en fin de fauchée utile.

Ainsi, les signaux démodulés utilisés pour le traitement d'image sont inscrits dans un rectangle IHJG 59 centré sur l'origine des axes. Ils ont donc tous le même support temporel $[\tau_d,\ \tau_d+T_a]$ ou $[\tau_d,\ \tau_d+T_d]$ tout en étant répartis sur une bande de fréquence $[-(B-B_a)/2,\ (B-B_a)/2]$ et en conservant des retards variables par rapport aux signaux d'écho qui en sont à l'origine, ces retards étant fonction des positions en distance dans la fauchée utile, des cibles ayant retourné les échos.

La résolution spatiale distance est inversement proportionnelle à la bande de fréquence $B_a$ de la rampe de démodulation 54 :

$$B_a = |\alpha|T_a$$

Le milieu du support temporel utilisé est égal par construction au milieu de la rampe de démodulation, c'est-à-dire :

$$\tau_d + \frac{T_d}{2}$$

On en déduit l'expression mathématique du support temporel utilisé pour toutes les cibles de la fauchée utile en tenant compte de l'instant $\tau_0$ à partir duquel on commence à stocker les échantillons du signal de vidéo brute du radar "Deramp" :

$$\text{rect}\left[\frac{\tau + \tau_0 - \tau_d - T_d/2}{T_a}\right]$$

Ayant fixé la position en distance de la rampe de démodulation, et connaissant la durée $T_d$ de la rampe de démodulation, $T_a$ la durée de la partie utilisée de la rampe de démodulation et $T$ la durée d'une impulsion émise, il est possible de déterminer la position en distance de la première cible de la fauchée utile en constatant que la fin de son signal d'écho correspond à la fin du support temporel utilisé :

$$\tau_{df} = \tau_d + \frac{(T_d + T_a)}{2} - T$$

De même, la position en distance de la dernière cible de la fauchée utile est déterminée en constatant que le début de réception de son écho correspond au début du support temporel utilisé :

$$\tau_{ff} = \tau_d + \frac{(T_d - T_a)}{2}$$

En utilisant ces deux dernières expressions, on obtient la position en distance d'une cible au milieu de la fauchée :

$$\tau_{mf} = \tau_d - (T - T_d)/2$$

On en déduit la largeur de la fauchée :

$$T_f = \tau_{ff} - \tau_{df} = T - T_a$$

La largeur de la fauchée correspond à la différence entre la durée $T$ de l'impulsion émise et la durée $T_d$ ou $T_a$ de la rampe de démodulation. On remarque en outre que la bande spectrale occupée par les signaux d'échos en provenance de la fauchée utile est donnée par :

$$B_{FI} = \frac{B}{T}\tau_f = B\left(1 - \frac{T_a}{T}\right)$$

Il en résulte que la fréquence d'échantillonnage $F_e$ des convertisseurs analogique-numérique 46, 47 placés sur les voies de sortie du démodulateur amplitude-phase DAP 45 de la partie réception du radar Deramp, qui correspond à la cadence rapide d'échantillonnage en distance, doit être au minimum égale à cette bande $B_{FI}$ pour respecter le théorème de Nyquist. Dans la pratique, il est nécessaire de prendre une marge de sur-échantillonnage qui dépend du gabarit de filtrage équivalent du récepteur. Ce sur-échantillonnage est en général plus important que pour un mode de compression d'impulsion par corrélation car ici, les signaux parasites susceptibles de se replier dans la bande utile comprennent les cibles voisines de la fauchée utile en plus du bruit thermique.

Le signal vidéo brute $v_l(\tau,t)$ délivré par le radar "Deramp" après une démodulation effectuée dans de telles conditions, peut se mettre sous la forme :

$$v_1(\tau,t) = \iint \gamma(\tau',t') h_{SAR}(t-t'-T_e/2) rect\left[\frac{\tau+\tau_0-\tau_d-T_d/2}{T_a}\right]$$

$$\exp\left[i2\pi\frac{1}{2}\alpha\left\{(\tau_c+\tau')^2-\tau_d^2+\frac{T^2}{4}-\frac{T_d^2}{4}+T(\tau_c+\tau')-T_d\tau_d\right\}\right]$$

$$\exp\left[-i2\pi\alpha\left\{(\tau_c+\tau')-\tau_d+(T-T_d)/2\right\}(\tau+\tau_0)\right]d\tau'dt'$$

La fonction de fenêtrage rectangulaire rect() qui ne dépend plus des variables d'intégration τ' et t', peut être sortie de l'intégrale double et ne constitue plus un obstacle à son calcul. Il reste alors à prendre en compte les termes de phase associés à la démodulation.

Après démodulation, le signal vidéo brute délivré par un radar Deramp est soumis à une transformée de Fourier en distance avec une éventuelle pondération afin de discerner les cibles qui ont chacune une fréquence dépendant de leur retard par rapport à l'instant de déclenchement de la rampe de démodulation. Soit :

$$v_1(\tau,t) \xrightarrow{\quad TF_\tau \quad} v_2(F,t)$$

avec :

$$v_2(F,t) = \iint \gamma(\tau',t') h_{SAR}(t-t'-T_e/2)$$

$$\exp\left[i2\pi\frac{1}{2}\alpha\left\{(\tau_c+\tau')^2-\tau_d^2+\frac{T^2}{4}-\frac{T_d^2}{4}+T(\tau_c+\tau')-T_d\tau_d\right\}\right]$$

$$\int rect\left[\frac{\tau+\tau_0-\tau_d-T_d/2}{T_a}\right]W\left(\frac{\tau+\tau_0-\tau_d-T_d/2}{T_a}\right)$$

$$\exp\left[-i2\pi\alpha\left\{(\tau_c+\tau')-\tau_d+(T-T_d)/2\right\}(\tau+\tau_0)\right]e^{-i2\pi F\tau}d\tau dt'$$

où W est une fenêtre de pondération utilisée pour limiter le niveau des lobes secondaires.

Or, on a :

$$\int \text{rect}\left[\frac{\tau + \tau_0 - \tau_d - T_d/2}{T_a}\right] W\left(\frac{\tau + \tau_0 - \tau_d - T_d/2}{T_a}\right)$$

$$\exp\left[-i2\pi\alpha\left\{(\tau_c + \tau') - \tau_d + (T-T_d)/2\right\}(\tau + \tau_0)\right] e^{-i2\pi F\tau} d\tau$$

$$= \int \text{rect}\left[\frac{x}{T_a}\right] W\left(\frac{x}{T_a}\right) \exp\left[-i2\pi\alpha\left\{(\tau_c + \tau') - \tau_d + (T-T_d)/2\right\}(\tau_d + T_d/2)\right]$$

$$\exp\left[-i2\pi F(\tau_d + T_d/2 - \tau_0)\right] \exp\left[-i2\pi\alpha\left\{(\tau_c + \tau') - \tau_d + (T-T_d)/2\right\}x\right] e^{-i2\pi Fx} dx$$

$$= T_a \exp\left[-i2\pi F(\tau_d + T_d/2 - \tau_0)\right] \exp\left[-i2\pi\alpha\left\{(\tau_c + \tau') - \tau_d + (T-T_d)/2\right\}(\tau_d + T_d/2)\right]$$

$$\text{wsinc}\left[T_a\left\{F + \alpha(\tau_c + \tau' - \tau_d + (T-T_d)/2)\right\}\right]$$

où wsinc est le noyau de la réponse impulsionnelle et représente un sinus cardinal pondéré.
Finalement :

$$v_2(F,t) = T_a \exp\left[-i2\pi F(\tau_d + T_d/2 - \tau_0)\right] \iiint \gamma(\tau',t') h_{SAR}(t - t' - T_e/2)$$

$$\exp\left[i2\pi\frac{1}{2}\alpha\left\{(\tau_c + \tau')^2 - \tau_d^2 + \frac{T^2}{4} - \frac{T_d^2}{4} + T(\tau_c + \tau') - T_d\tau_d\right\}\right]$$

$$\exp\left[-i2\pi\alpha\left\{(\tau_c + \tau') - \tau_d + (T-T_d)/2\right\}(\tau_d + T_d/2)\right]$$

$$\text{wsinc}\left[T_a\left\{F + \alpha(\tau_c + \tau' - \tau_d + (T-T_d)/2)\right\}\right] d\tau' dt'$$

Une fois les termes constants en dehors de l'intégrale compensés et les termes de phase parasite simplifiés, on obtient :

$$v_3(F,t) = \iint \gamma(\tau',t') h_{SAR}(t - t' - T_e/2) \exp\left[i2\pi\frac{1}{2}\alpha\left\{\tau_c + \tau' - \tau_{mf}\right\}^2\right]$$

$$\text{wsinc}\left[T_a\left\{F + \alpha(\tau_c + \tau' - \tau_{mf})\right\}\right] d\tau' dt'$$

$$(2)$$

La fenêtre de pondération W () utilisée peut être une fenêtre de Hamming telle que :

$$W\left(\frac{\tau}{T_a}\right) = \text{rect}\left[\frac{\tau}{T_a}\right]\left\{k + (1-k)\cos\left(2\pi\frac{\tau}{T_a}\right)\right\}$$

Dans ce cas, le noyau de la réponse impulsionnelle est donné par :

$$\text{wsinc}(x) = k\,\text{sinc}(\pi x) + \frac{1-k}{2}\left\{\text{sinc}[\pi(x+1)] + \text{sinc}[\pi(x-1)]\right\}$$

où x représente la variable réduite $x = FT_a$ et où le coefficient k prend une valeur inférieure à 1, par exemple 0,58.

En réalité, il est intéressant de prendre la transformée de Fourier discrète en distance des seuls échantillons du tableau de données vidéo brute de réception associés au support temporel utilisé pour la démodulation. Il est en effet raisonnable de ne pas introduire dans les calculs les échantillons parasites en dehors de ce support. Mathématiquement, cela revient à prendre la transformée de Fourier en distance du signal $v_1(\tau,t)$ avancé en distance de $\tau_d + T_d/2 - \tau_0 - T_a/2$. Dans ces conditions, on obtient un nouveau signal $v_2(F,t)$ tel que :

$$v_2(F,t) = \iint \gamma(\tau',t') h_{SAR}(t - t' - T_e/2)$$

$$\times \exp\left[ i2\pi \frac{1}{2}\alpha\left\{ (\tau_c + \tau')^2 - \tau_d^2 + \frac{T^2}{4} - \frac{T_d^2}{4} + T(\tau_c + \tau') - T_d\tau_d \right\} \right]$$

$$\int rect\left[ \frac{\tau - T_a/2}{T_a} \right] W\left( \frac{\tau - T_a/2}{T_a} \right)$$

$$\times \exp\left[ -i2\pi\alpha\left\{ (\tau_c + \tau') - \tau_d + (T - T_d)/2 \right\} (\tau + \tau_d + (T_d - T_a)/2) \right] e^{-i2\pi F\tau} d\tau d\tau' dt'$$

En reprenant la même démarche que précédemment, on obtient pour $v_3(F, t)$ la même expression qu'à la relation (2) après compensation d'un nouveau terme constant.

Le signal $v_3(F, t)$ est le signal vidéo brute après compression d'impulsion. Pour le rendre compatible avec les autres étapes de traitement plus spécifiques au traitement SAR, il est souhaitable de changer sa variable fréquentielle F contre une variable temporelle $\tau$ plus habituelle dans un signal vidéo brute de réception d'un radar SAR. On pose donc le changement de variable :

$$\tau = -\frac{F}{\alpha}$$

L'expression du signal vidéo brute de réception du radar Deramp après compression d'impulsion devient alors :

$$v_3(\tau,t) = \iint \gamma(\tau',t') h_{SAR}(t - t' - T_e/2) \exp\left[ i2\pi \frac{1}{2}\alpha\left\{ \tau_c + \tau' - \tau_{mf} \right\}^2 \right]$$

$$\times \text{wsinc}\left[ B_a\left\{ \tau - (\tau_c + \tau' - \tau_{mf}) \right\} \right] d\tau' dt'$$

En procédant à un nouveau changement de variable, il vient :

$$v_3(\tau,t) = \iint \gamma(\tau - u - \tau_c + \tau_{mf}, t') h_{SAR}(t - t' - T_e/2) \exp\left[ i2\pi \frac{1}{2}\alpha\left\{ \tau - u \right\}^2 \right]$$

$$\times \text{wsinc}[B_a u] du dt'$$

ou encore :

$$v_3(\tau,t) = \text{wsinc}[B_a \tau] *_\tau \int \gamma(\tau - \tau_c + \tau_{mf}, t') \exp\left[ i2\pi \frac{1}{2}\alpha\tau^2 \right] h_{SAR}(t - t' - T_e/2) dt'$$

$$(3)$$

le signe $*_\tau$ désignant une opération de convolution selon la variable temporelle distance $\tau$.

Cette expression montre qu'après compression d'impulsion, le signal résultant est la convolution de la réponse impulsionnelle intrinsèque du traitement (sinus cardinal pondéré) avec le signal recherché (le terme sous intégrale) multiplié par un terme de phase parasite, retardé du temps de propagation et référencé par rapport au milieu de la fauchée utile. Comme indiqué précédemment, le terme de phase parasite provient du fait que les signaux démodulés, bien qu'ayant tous le même support temporel, ont des retards variables vis à vis des signaux d'écho qui en sont à l'origine, ces retards étant fonction des positions en distance dans la fauchée utile, des cibles ayant retourné les échos.

Pour appliquer un traitement d'image au tableau des données vidéo brute de réception d'un radar Deramp obtenues après compression d'impulsion par démodulation, transformée de Fourier monodimensionnelle en distance et remplacement, dans la dimension distance, de la variable fréquentielle F par une variable temporelle $\tau$, il faut procéder à une remise en ordre des données en distance pour que celles-ci se succèdent par ordre croissant d'éloignement. En effet, le centre de la fauchée utile est associé par exemple à la fréquence nulle et il en résulte que par repliement du spectre, les fréquences négatives associées aux échos des cibles proches apparaissent dans le domaine des fréquences positives dans le haut de la bande occupée par les fréquences positives associées aux échos des cibles éloignées comme le montrent les figures 5 et 6.

En effet, soient :

- N le nombre d'échantillons ou données du tableau sur lequel a été effectuée la transformation de Fourier en distance,
- $F_e$ la fréquence d'échantillonnage du radar en distance,
- i l'indice de la case fréquence courante,

la relation entre une case fréquence et la fréquence associée est donnée par :

$$\begin{cases} 0 \leq i \leq N/2, & F = \dfrac{iF_e}{N} \\[2ex] N/2 < i < N, & F = \dfrac{(i-N)F_e}{N} \end{cases}$$

Comme la bande spectrale occupée par la fauchée utile couvre l'intervalle $[-B_{FI}/2, B_{FI}/2]$, on en déduit que le nombre N, de points utiles en sortie de la transformée de Fourier en distance vaut :

$$N_f = \text{ODD}\left[ \text{rint}\left( N\frac{B_{FI}}{F_e} \right) \right]$$

où :

- rint est la fonction qui rend l'entier le plus proche de son argument
- ODD est la fonction qui rend son argument entier s'il est impair ou lui ajoute 1 dans le cas contraire.

La permutation des échantillons en sortie de la transformée de Fourier en distance peut donc se faire dans un vecteur de taille $N_f$. En raison de la relation :

$$\tau = -\frac{F}{\alpha}$$

qui lie la fréquence F au temps de propagation $\tau$ ou à la distance, il faut considérer deux cas suivant le signe de la pente $\alpha$ de modulation linéaire de fréquence de l'impulsion émise. En reprenant la notation $v_3$ pour le signal ou vecteur obtenu directement après la transformée de Fourier en distance et en notant $v_4$ le signal ou vecteur obtenu après réarrangement des cases fréquence, il vient :

$$\begin{cases} \mathrm{sgn}(\alpha) = -1, \qquad v_4(i) = v_3\left[\left(N - \dfrac{N_f - 1}{2} + i\right) \mathrm{mod}\, N\right], 0 \le i \le N_f - 1 \\[4mm] \mathrm{sgn}(\alpha) = 1, \qquad v_4(i) = v_3\left[\left(N + \dfrac{N_f - 1}{2} - i\right) \mathrm{mod}\, N\right], 0 \le i \le N_f - 1 \end{cases}$$

Ces relations de réarrangement sont illustrées à la figure 5 pour le cas où le signe de la pente de modulation $\alpha$ est positif et à la figure 6 pour le cas où le signe de la pente de modulation $\alpha$ est négatif.

Du point de vue mathématique, le réarrangement des cases fréquence se traduit par une modification de l'expression du signal $v_3(\tau, t)$ donnée par la relation (3) qui devient :

$$v_4(\tau, t) = \iint \gamma\left(\tau - u - \tau_c + \tau_{mf}, t'\right) h_{SAR}\left(t - t' - T_e/2\right)$$
$$\times \exp\left[i2\pi \frac{1}{2}\alpha\{\tau - u\}^2\right] \mathrm{wsinc}[B_a u]\, du\, dt'$$

ou encore :

$$v_4(\tau, t) = \mathrm{wsinc}[B_a \tau] *_\tau \int \gamma\left(\tau - \tau_c + \tau_{df}, t'\right)$$
$$\times \exp\left[i2\pi \frac{1}{2}\alpha\left(\tau + \tau_{df} - \tau_{mf}\right)^2\right] h_{az}\left(t - t' - T_e/2\right) dt'$$

$$(4)$$

On constate que le signal obtenu après une compression d'impulsion par ce mode de traitement est le résultat de la convolution de la réponse impulsionnelle intrinsèque du traitement (sinus cardinal pondéré) avec le signal recherché multiplié par un terme de phase parasite constitué d'une phase quadratique centrée sur le milieu de la fauchée utile.

On comprend alors pourquoi la solution qui consiste, pour compenser la phase parasite, à multiplier le signal comprimé directement par le conjugué du terme de phase parasite n'est pas satisfaisante. En effet, la correction n'est valable que pour le sommet de la réponse impulsionnelle du traitement de compression d'impulsion (pic du sinus cardinal pondéré). Cette correction n'est pas compatible avec un traitement d'extraction d'image SAR dans le domaine 2D spectral seul capable de fournir une réponse impulsionnelle correcte sur l'image finale pour les très hautes résolutions. En outre, il est certain qu'avec d'autres types de traitements d'extraction d'image SAR tels que par exemple le range-Doppler, cette correction de phase entraîne également une dégradation de la réponse impulsionnelle sur l'image.

Pour obtenir une compensation de phase parasite plus efficace, l'on remarque que la phase parasite introduite par la démodulation dépend de la position de la cible dans la fauchée. Or cette position dépend de l'instant considéré au cours du temps d'éclairement et peut être exprimée non seulement en distance par la variable $\tau + \tau_{df}$ comme c'est le cas dans la formule du déphasage parasite apparaissant dans l'expression du signal reçu après compression d'impulsion $v_4(\tau, t)$ développée à la relation (4), mais également en azimut par la variable $\tau_c$. Il y a donc équivalence entre les deux expressions :

$$\exp\left[i2\pi \frac{1}{2}\alpha\left(\tau + \tau_{df} - \tau_{mf}\right)^2\right] \Leftrightarrow \exp\left[i2\pi \frac{1}{2}\alpha\left(\tau_c - \tau_{mf}\right)^2\right]$$

En utilisant cette équivalence dans la relation (4), il vient :

$$v_4(\tau,t) = \text{wsinc}[B_a\tau] *_\tau \int \gamma\left(\tau - \tau_c + \tau_{df}, t'\right)$$
$$\times \exp\left[i2\pi\frac{1}{2}\alpha\left(\tau_c(t - t' - T_e/2) - \tau_{mf}\right)^2\right] h_{SAR}(t - t' - T_e/2) dt'$$

Il est maintenant plus facile de déterminer comment compenser cette phase parasite dans la suite du traitement SAR de construction d'image. En effet, le terme de phase parasite vient alors compléter la réponse impulsionnelle du filtre traditionnel de focalisation d'image, ce qui revient à adopter un filtre de focalisation d'image modifié ayant pour nouvelle réponse impulsionnelle :

$$h_{SAR/das}(t) = h_{SAR}(t)\exp\left[i2\pi\frac{1}{2}\alpha\left(\tau_c(t) - \tau_{mf}\right)^2\right]$$

En posant :

$$\tau_c(t) = \tau_{c0} + \tau_c'(t)$$

avec $\tau_{c0}$ représentant le temps de propagation au milieu du temps d'éclairement, il vient :

$$h_{SAR/das}(t) = h_{SAR}(t)\exp\left[i2\pi\frac{1}{2}\alpha\left(\tau_{c0} - \tau_{mf}\right)^2\right]$$
$$\times \exp\left[-i2\pi\alpha\left(\tau_{c0} - \tau_{mf}\right)\tau_c'(t)\right]\exp\left[i2\pi\frac{1}{2}\alpha\tau_c'^2(t)\right]$$

$$(5)$$

Le premier terme exponentiel :

$$\exp\left[i2\pi\frac{1}{2}\alpha\left(\tau_{c0} - \tau_{mf}\right)^2\right]$$

représente un terme de phase constant en azimut qui peut être compensé à l'issue du traitement de construction d'image sur le tableau des coefficients complexes de réflexion $\gamma(\tau, t)$ en tenant compte du fait que $\tau_{c0}$ représente alors la position du pixel courant dans la fauchée utile après compression et non dans la fauchée utile de l'image finale, une différence pouvant provenir en raison du nombre des cases distance de la marge négative utilisée lors du découpage en blocs distance opéré au cours du traitement de construction d'image qui sont éliminées en fin de traitement. Ce terme de phase, qui n'a pas d'influence sur l'image radar construite à partir des modules des coefficients complexes de réflexion de chaque point de la zone imagée, ne doit être compensé que dans les cas où il est nécessaire de connaître la phase du coefficient complexe de réflexion, par exemple lors que l'on désire effectuer des traitements d'interférométrie sur des images radar d'une même zone prises sous des angles différents.

Le deuxième terme exponentiel :

$$\exp\left[-i2\pi\alpha\left(\tau_{c0}-\tau_{mf}\right)\tau_c'(t)\right]\exp\left[i2\pi\frac{1}{2}\alpha\tau_c'^2(t)\right]$$

représente un terme de phase supplémentaire qui n'a d'influence que sur l'histoire de phase Doppler pendant le temps d'éclairement et non sur le chemin de migration de sorte qu'il peut être ajouté à la réponse impulsionnelle traditionnelle du filtre de focalisation image. En se contentant des termes Doppler jusqu'à l'ordre 3, ce deuxième terme exponentiel à prendre en compte dans l'expression du filtre de focalisation image peut être mis sous la forme approchée :

$$\exp i2\pi\frac{\alpha}{f_c}\left\{\left(\tau_{c0}-\tau_{mf}\right)f_{dc}t+\frac{1}{2}\left(f_{dr}\left(\tau_{c0}-\tau_{mf}\right)+\frac{f_{dc}^2}{f_c}\right)t^2\right.$$
$$\left.+\frac{1}{6}\left(f_{dq}\left(\tau_{c0}-\tau_{mf}\right)+3\frac{f_{dc}f_{dr}}{f_c}\right)t^3\right\}$$

avec un Doppler moyen $f_{dc}$, une pente Doppler $f_{dr}$ et une accélération Doppler $f_{dq}$. On remarque qu'une partie de ce terme dépend de la position de la cible par rapport au milieu de la fauchée utile. On peut tenir compte de cette non stationnarité en distance en même temps que de celle de la réponse impulsionnelle du filtre de focalisation image en adoptant, pour le traitement de construction de l'image, des blocs distance suffisamment étroits pour que les deux non stationnarités puissent être négligées.

Pour la correction de phase proprement dite, il faut être capable d'exprimer la position distance correspondant au terme ($\tau_{c0}$ - $\tau_{mf}$) dans les blocs distance découpés dans le tableau de données obtenu après compression d'impulsion, c'est-à-dire démodulation, transformées de Fourier en distance, changement de variable fréquentielle distance par une variable temporelle distance et réarrangement des cases distance du tableau dans un ordre croissant. En s'intéressant au découpage par blocs du tableau de données qui se fait avec des recouvrements pour tenir compte de la migration distance, et en posant:

- $N_d$ le nombre d'échantillons en distance ou cases distance du tableau de données correspondant à l'étendu de la fauchée utile après compression d'impulsion (migrations incluses),
- $N_{dbn}$ le nombre de cases distance du tableau de données formant la marge négative d'un bloc distance,
- $N_{dbp}$ le nombre de cases distance du tableau de données formant la marge positive d'un bloc distance,
- $N_{db}$ le nombre total de blocs distance,
- $N_{dbu}$ le nombre de cases distance utiles pour les $N_{db}$-1 premiers blocs,

on peut écrire que le nombre total de blocs distance vaut :

$$N_{db}=ceil\left(\frac{N_d-N_{dbn}-N_{dbp}}{N_{dbu}}\right)$$

où ceil désigne une fonction qui rend l'entier supérieur ou égal à son argument. Le dernier bloc distance possède alors un nombre de cases distance utiles égal à :

$$N_{dbu}'=N_d-N_{dbn}-N_{dbp}-(N_{db}-1)N_{dbu}$$

Dans ces conditions, la position temporelle du milieu de la fauchée utile après compression d'impulsion est donnée par :

$$\tau_{mf} = 0{,}5 \times (N_d - 1) T_e$$

et celle du centre de la portion utile de chaque bloc distance par :

$$\begin{cases} \tau_{c0}(k) = \left[N_{dbm} + kN_{dbu} + 0{,}5(N_{dbu} - 1)\right]T_e & 0 \le k \le N_{dbu} - 1 \\ \tau_{c0}(N_{db} - 1) = \left[N_{dbn} + (N_{db} - 1)N_{dbu} + 0{,}5(N'_{dbu} - 1)\right]T_e \end{cases}$$

On note que la position temporelle absolue de la première case distance de la fauchée n'a pas été introduite puisque l'on n'est seulement intéressé par la position relative d'une cible par rapport au centre de la fauchée utile après compression d'impulsion.

La figure 7 illustre les principales étapes du traitement subi par le signal de réception d'un radar Deramp utilisé en radar à synthèse d'ouverture pour de l'imagerie radar.

Le signal de réception du radar Deramp $v_0(\tau, t)$ est tout d'abord démodulé dans un démodulateur 60 par une rampe de démodulation $v_d(\tau, t)$ reprenant une partie de durée $T_d$ de l'impulsion modulée linéairement en fréquence émise, puis transformé en numérique et échantillonné, par un convertisseur analogique-numérique 61 en un tableau de données à deux dimensions distance et azimut.

Ce tableau de données est ensuite soumis à une opération de troncature 62 consistant à remplacer par des valeurs nulles ses données appartenant à des cases distance situées en dehors de la durée d'analyse $T_a$ qui commence à l'instant de début de réception d'un écho renvoyé par une cible placée en distance à l'extrémité éloignée de la fauchée utile et qui se termine à l'instant de fin de réception d'un écho renvoyé par une cible placée en distance à l'extrémité proche de la fauchée utile. Cette opération de troncature est facultative lorsque la durée $T_d$ de la rampe de modulation a été limitée à la durée d'analyse $T_a$. Elle est cependant préférable même dans ce dernier cas, car les données placées dans les cases distance du tableau extérieure à la durée d'analyse $T_a$ constituent du bruit parasite.

Après l'opération de troncature 62, le tableau de données est soumis à une fenêtre de pondération 63 destinée à réduire les lobes secondaires induits par le filtrage ultérieur de focalisation d'image dont la réponse impulsionnelle est en sinus cardinal.

Après la pondération par fenêtrage 63, le tableau de données à deux dimensions temporelles distance et azimut est soumis à une transformée de Fourier en distance 64 ayant pour but de poursuivre la compression d'impulsion entamée avec la démodulation 60. Il en résulte un tableau de données formé des échantillons en distance et azimut d'un signal $v_2(F, t)$ qui a été étudié précédemment.

La variable fréquentielle en distance F résultant de la transformée de Fourier en distance 64 est ensuite changée en une variable temporelle en distance $\tau$ au cours d'une étape de changement de variable 65. Puis les cases distance du tableau sont réarrangées au cours d'une étape de réarrangement 66 pour qu'elles se succèdent dans le tableau, selon un ordre de distance croissante. Ces étapes qui terminent la compression d'impulsion proprement dite aboutissent à un tableau de données formé des échantillons en distance d'un signal $v_4(\tau, t)$ qui a été étudié précédemment et qui est soumis à un traitement de construction d'image SAR légèrement modifié.

Ce traitement SAR commence, comme cela est habituel par un découpage 67 du tableau des données en blocs distance avec recouvrement pour tenir compte du phénomène de migration distance, chaque bloc ayant une étendue en distance suffisamment faible pour que la réponse impulsionnelle du filtre de focalisation et la loi de variation de phase parasite introduite par la compression d'impulsion puissent être considérées comme stationnaires en distance. Chaque bloc distance est ensuite soumis à une transformée de Fourier en distance 68 suivie d'une transformée de Fourier en azimut 69. Puis ses données placées dans les domaines fréquentiels en distance et azimut sont multipliées en 70, par le conjugué $H'^*_{SAR/das}(t)$ de la fonction de transfert d'un filtre de focalisation image modifiée pour tenir compte d'un terme de phase variable introduit par la compression d'impulsion. Cette fonction de transfert modifiée est la transformée de Fourier bidimentionnelle en distance et azimut d'une réponse impulsionnelle $h'_{SAR/das}(t)$ s'exprimant en fonction de la réponse impulsionnelle $h_{SAR}(t)$ d'un filtre de focalisation d'image classique par une relation de la forme :

$$h'_{SAR/das} = h_{SAR} \exp i2\pi \frac{\alpha}{f_c} \left\{ \left( \tau_{c0} - \tau_{mf} \right) f_{dc} t + \frac{1}{2} \left( f_{dr} \left( \tau_{c0} - \tau_{mf} \right) + \frac{f_{dc}^2}{f_c} \right) t^2 \right.$$
$$\left. + \frac{1}{6} \left( f_{dq} \left( \tau_{c0} - \tau_{mf} \right) + 3 \frac{f_{dc} f_{dr}}{f_c} \right) t^3 \right\}$$

provenant de l'expression de la réponse impulsionnelle modifiée $h_{SAR/das}$ figurant à la relation (5) à laquelle on a retiré la partie constante du terme de phase dû à la démodulation.

Chaque bloc distance a ensuite ses échantillons replacés dans les domaines temporels en distance et en azimut par une transformation inverse de Fourier en azimut 71 suivie d'une transformation inverse de Fourier en distance 72.

Les blocs distance sont alors privés de leurs marges de recouvrement et juxtaposés en 73 pour reconstituer un tableau de coefficients complexes de réflexion $\gamma(\tau,t)$ des points de la zone à imager, les modules de ces coefficients de réflexion déterminant le contraste de chaque point de l'image.

Sur la figure 7, on a représenté une étape supplémentaire 74, qui consiste à compenser la partie constante du terme de phase dû à la compression d'impulsion afin d'appliquer certains traitements à l'image comme des traitements d'interférométrie.

La correction, que l'on vient de proposer, du terme de phase parasite dû au mode de compression d'impulsion particulier utilisé dans un radar Deramp tire son efficacité de la prise en compte précise du phénomène physique qui en est à la base. En outre, elle a le grand intérêt de se combiner harmonieusement avec les opérations d'un traitement SAR de construction d'image classique et de ne pas augmenter, de manière conséquente, la quantité des calculs nécessaires à la construction d'image radar.

## Revendications

1. Procédé de traitement du signal de réception d'un radar SAR à rampes de fréquences pour obtenir une image radar, ledit radar SAR étant embarqué à bord d'un porteur en déplacement au dessus d'une zone de terrain à imager qu'il illumine, émettant des impulsions modulées linéairement en fréquence de durée T, répétées de manière cohérente, démodulant le signal d'écho reçu en retour entre chaque impulsion émise par une rampe de démodulation qui est centrée en distance sur le milieu de la zone utile illuminée ou fauchée utile, qui reprend la forme de tout ou partie de l'impulsion émise et qui a une durée $T_d$ inférieure ou égale à la durée T d'une impulsion émise, suffisante pour recouvrir l'intervalle de temps de réception où se chevauchent les signaux d'écho de l'ensemble des cibles de la fauchée utile, et délivrant après démodulation, un signal vidéo brute de réception disponible sous la forme d'échantillons successifs ou données de réception qui sont pris à une double cadence : une cadence rapide correspondant à la succession des portes distance et définissant une dimension temporelle distance $\tau$ selon un axe distance orienté latéralement par rapport à la trajectoire du porteur du radar SAR, et une cadence lente correspondant à la succession des récurrences et définissant une dimension temporelle azimut t selon un axe azimut orienté dans la direction de déplacement du porteur du radar SAR, et qui se présentent sous la forme d'un tableau de données de réception à deux dimensions distance et azimut, ledit procédé étant caractérisé en ce qu'il comporte les étapes successives de traitement suivantes :

   - sélection d'une durée utile $T_a$ pour la démodulation commençant au plus tôt à l'instant de début de réception d'un écho renvoyé par une cible placée en distance à l'extrémité éloignée de la fauchée utile et se terminant au plus tard à l'instant de fin de réception d'un écho renvoyé par une cible placée en distance à l'extrémité proche de la fauchée utile,
   - remplacement des données du tableau de données de réception, considérées selon la dimension distance, par leur transformée de Fourier monodimensionnelle en distance pour obtenir après la démodulation un genre de compression d'impulsion affectée d'un terme de phase parasite de compression d'impulsion,
   - réarrangement des données du tableau selon la dimension distance afin de disposer de données correspondant à un ordre d'éloignement croissant en distance,
   - découpage du tableau en bandes chevauchantes parallèlement à l'axe azimut de manière à avoir des bandes correspondant à des plages de distance étroites $\tau_i$ où peut être déterminé localement, en fonction des paramètres géométriques de la prise de vue, un filtre bidimensionnel de focalisation de l'image, ayant une réponse impulsionnelle $h_1(\tau,t,\tau_i)$ à deux variables temporelles $\tau$ distance et t azimut, et une fonction de correction de la phase parasite due à la compression d'impulsion, stationnaires dans la bande de distance $\tau_i$,

- filtrage des bandes de tableau par le filtre bidimensionnel de focalisation d'image dont la réponse impulsionnelle a été modifiée par la fonction de correction de la phase parasite,

- juxtaposition des bandes de tableau résultant du filtrage pour obtenir un tableau des coefficients complexes de réflexion des points de la zone de terrain illuminée, et

- construction d'une image de la zone illuminée à partir des modules des coefficients complexes de réflexion figurant dans le tableau obtenu à l'étape précédente.

2. Procédé selon la revendication 1, caractérisé en ce que la sélection de la durée utile $T_a$ de démodulation se fait en adoptant une rampe de démodulation dont la durée $T_d$ correspond à cette durée utile de démodulation $T_a$.

3. Procédé selon la revendication 1, caractérisé en ce que la sélection de la durée utile $T_a$ de démodulation se fait sur le tableau bidimentionnel de données de réception tel qu'il est délivré par le radar, avant qu'il ait subi la transformée de Fourier monodimensionnelle en distance, par retrait des données de réception se présentant selon l'axe distance en dehors de la durée utile $T_a$ choisie et leurs remplacements par des valeurs nulles.

4. Procédé selon la revendication 1, caractérisé en ce que le filtrage des bandes de tableau par le filtre bidimensionnel de focalisation d'image dont la réponse impulsionnelle a été modifiée par la fonction de correction de la phase parasite, est réalisé sur chaque bande du tableau des données en passant dans les espaces des fréquences distance et azimut, par deux transformations monodimensionnelles de Fourier directes effectuées successivement selon la dimension distance puis selon la dimension azimut.

5. Procédé selon la revendication 1, caractérisé en ce qu'il consiste, en outre à appliquer aux phases des coefficients complexes de reflexion de la zone de terrain illuminée obtenus après juxtaposition des bandes de tableau résultant du filtrage, une deuxième fonction de correction complétant l'effet de la première appliquée sur la réponse impulsionnelle du filtre de focalisation image.

6. Procédé selon la revendication 1, caractérisé en ce que ladite fonction de correction de phase parasite utilisée pour modifier la réponse impulsionnelle du filtre de focalisation image a pour expression :

$$\exp\left[-i2\pi\alpha\left(\tau_{c0} - \tau_{mf}\right)\tau'_c(t)\right]\exp\left[i2\pi\frac{1}{2}\alpha\tau'^2_c(t)\right]$$

a étant la pente de modulation linéaire de fréquence des impulsions émises,

$\tau_{c0}$ étant la position temporelle en distance d'une cible au milieu de son temps d'éclairement par le radar en défilement azimutal sur sa trajectoire, c'est-à-dire la position temporelle en distance du centre de la portion utile de chaque bloc,

$\tau_{mf}$ étant la position temporelle en distance d'une cible située au milieu de la fauchée utile, et

$\tau'_c(t)$ étant une fonction de l'azimut définie par :

$$\tau'_c(t) = \tau_c(t) - \tau_{c0}$$

où $\tau_c(t)$ est le temps de propagation du signal d'écho d'une cible qui varie avec l'azimut.

7. Procédé selon la revendication 5, caractérisé en ce que ladite deuxième fonction de correction de phase utilisée pour modifier les phases des coefficients complexes de reflexion de la zone de terrain illuminée obtenus après juxtaposition des bandes de tableau résultant du filtrage a pour expression :

$$\exp\left[i2\pi\frac{1}{2}\alpha\left(\tau_{c0} - \tau_{mf}\right)^2\right]$$

$\alpha$ étant la pente de modulation linéaire de fréquence des impulsions émises,

$\tau_{c0}$ étant la position temporelle en distance d'une cible au milieu de son temps d'éclairement par le radar en défilement azimutal sur sa trajectoire, c'est-à-dire la position temporelle en distance du centre de la portion utile de chaque bloc,

$\tau_{mf}$ étant la position temporelle en distance d'une cible située au milieu de la fauchée utile.

FIG.1

FIG.2

FIG.3

FIG.4

FIG.5

FIG.6

FIG.7

EP 0 877 260 A1

Office européen
des brevets

**RAPPORT DE RECHERCHE EUROPEENNE**

Numéro de la demande

EP 98 40 1088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 985 704 A (SMITH ANDREW M) 15 janvier 1991 <br> * le document en entier * | 1 | G01S13/90 |
| A | US 5 608 404 A (BURNS BRYAN L ET AL) 4 mars 1997 <br> * le document en entier * | 1 | |

|  |  |  | DOMAINES TECHNIQUES RECHERCHES (Int.Cl.6) |
|---|---|---|---|
|  |  |  | G01S |

Le présent rapport a été établi pour toutes les revendications

| Lieu de la recherche | Date d'achèvement de la recherche | Examinateur |
|---|---|---|
| LA HAYE | 7 août 1998 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)